# EUROPEAN PATENT SPECIFICATION

(11) **EP 4 322 345 B1**
(45) Date of publication and mention of the grant of the patent: **29.10.2025**
(21) Application number: 22190323.0
(22) Date of filing: 12.08.2022
(51) Int. Cl.: H01S 3/07, H01S 3/17, H01S 3/23, H01S 3/06, H01S 3/0941, H01S 3/00, H01S 3/04, H01S 3/16, F28F 3/00

(54) **HIGH-ENERGY HIGH-POWER DIODE PUMPED BROADBAND LASER**
HOCHENERGETISCHER, DIODENGEPUMPTER BREITBANDLASER MIT HOHER LEISTUNG
LASER POMPÉ À LARGE BANDE À DIODE HAUTE ÉNERGIE ET HAUTE PUISSANCE

(43) Date of publication of application: 14.02.2024
(73) Proprietor: Marvel Fusion GmbH, 80339 Munich (DE)
(72) Inventor: Gaul, Erhard, 70327 Stuttgart (DE); Ruhl, Hartmut, 63699 Kefenrod (DE)
(74) Representative: HKW Intellectual Property PartG mbB

(56) References cited:
- EP-A2- 1 879 271
- US-A1- 2020 076 150
- GAUL E ET AL: "Hybrid OPCPA/Glass 10 PW laser at 1 shot a minute", 2018 CONFERENCE ON LASERS AND ELECTRO-OPTICS (CLEO), OSA, 13 May 2018 (2018-05-13), pages 1 - 2, XP033382105
- BATYSTA FRANTISEK ET AL: "Spectral pulse shaping of a 5Hz, multi-joule, broadband optical parametric chirped pulse amplification frontend for a 10 PW laser system", OPTICS LETTERS, vol. 43, no. 16, 6 August 2018 (2018-08-06), US, pages 3866 - 3869, XP093017293, ISSN: 0146-9592, DOI: 10.1364/OL.43.003866
- DEMIRBAS UMIT ET AL: "Detailed investigation of absorption, emission and gain in Yb:YLF in the 78-300?K range", OPTICAL MATERIALS EXPRESS, vol. 11, no. 2, 6 January 2021 (2021-01-06), US, pages 250, XP093177467, ISSN: 2159-3930, DOI: 10.1364/OME.415253

## Description

### TECHNICAL FIELD

The present invention relates to a diode-pumped laser, to an amplifier and to a method for amplifying.

### TECHNICAL BACKGROUND

Diode-pumped laser systems and solid-state diode-pumped laser systems are well-known in the art. Solid-state lasers and particularly solid-state laser amplifiers, comprise a gain medium which is typically a crystal, a ceramic crystal, or an amorphous material such as glass. Suitable gain medium host crystals or glasses may be doped with rare earth materials such as for instance neodymium, ytterbium, thulium, or erbium. Titanium-sapphire laser, Ti:Al₂O₃ have also found wide application as gain materials in view of their tunability and ability to generate ultrashort pulses.

The gain material can be optically pumped by diode light or by other light sources to achieve a so-called population inversion state. These optical pumps are generally coupled to the gain medium via coupling means. Lenses are well-known examples of such coupling means and diode pumps have been largely employed in the art as optical pumps.

Patent documents US 6,937,629 and US 7,103,078 relate to a configuration wherein the gain material is shaped not as a single material but rather as a plurality of spaced-apart materials each of which is contacted by a cooling fluid. This configuration allows to mitigate the problem of thermal stress in the gain material thus increasing the achieved average power output.

In the art, there are also known configurations in which the gain medium consists of two different glass types. For instance, "Spectral pulse shaping of a 5 Hz, multi-joule, broadband optical parametric chirped pulse amplification frontend for a 10 PW laser system", BATYSTA et Al., Vol. 43, No. 16 / 15 August 2018 / Optics Letters, discloses a gain medium made of Nd-doped phosphate and silicate glass.

Patent document US 2020/ 076150 A1 relates to a high energy pulsed solid-state laser and method for scaling lasers to high average power. It discloses that the gain bandwidth of an amplifier can be increased by utilizing the gain along multiple crystal axes of an anisotropic gain material for which the absorption/gain spectra are different along the various optical axes.

Document *"*Hybrid OPCPA/ Glass 10PW laser at 1 shot a minute" 2018 conference on lasers and electro-optics, 13 May 2018 pages 1-2 XP033382105 relates to a 10PW OPCA/glass laser for ELI-beamlines. The power amplifier is composed of 2 multipass amplifiers (PA1 and PA2) leading to amplified energy of more than 1500 Joules. Silicate and phosphate glass are used for bandwidth management and high energy amplification.

### SUMMARY

The solutions known in the art, however, do not allow to generate broadband radiation having simultaneously, ultrashort pulse duration, high energy pulses, and high efficiency. In particularly having a pulse duration equal to or shorter than 100 fs and for instance equal to, or lower than 50 fs, having energies above 10 J per pulse, and having laser pulse to wall-plug efficiency above 3%.

The shortcomings of the art and particularly, the absence of high energy, high efficiency, sub-100 fs laser radiation hinders the full exploitation of lasers in a number of technological fields. Such laser radiation may be employed for instance to bring forward the research in the field of laser fusion, by allowing fusion ignition, as also discussed in the publication "A laser-driven mixed fuel nuclear fusion micro-reactor concept", arXiv:2202.03170v5, Hartmut Ruhl and Georg Korn and in the publication "StarDriver: A Flexible Laser Driver for Inertial Confinement Fusion and High Energy Density Physics", October 2014 Journal of Fusion Energy, D. Eimerl, al..

Furthermore, said laser radiation could also be employed in the field of transmutation with fusion-generated neutrons as well as being employed in particle acceleration and X-rays generation. As another example said laser radiation could be used for muons and/or neutron generation.

Therefore, there is a general need in the art to enable generation of short, sub-l00fs, laser pulses (e.g., less than 70 fs, more preferably less than 50 fs) having high energy (e.g., ranging from 10 to 200 J) and high peak power (e.g., 1 PW).

It is an object of the present disclosure to at least partially address or at least partially mitigate the above shortcomings. Further preferred embodiments of the disclosure are presented in connection with the dependent claims. This objective is reached in accordance with the teachings of the independent claims. The dependent claims also present other further advantageous embodiments.

The inventors have recognized that the pulse duration output by the laser can be controlled by employing different types of solid-state elements as gain medium. By selecting the solid-state elements based on their respective spectral properties it becomes feasible to obtain an emission spectrum sufficiently broad in the wavelength domain. This is advantageously achieved, by selecting the solid-state elements so that the fluorescence peaks of their emission spectra are appropriately, i.e., sufficiently, shifted.

In view of the relationship between the spectral bandwidth of a laser pulse and its pulse duration it is possible to tailor the pulse duration by tailoring the spectral bandwidth. In other words, by selecting the solid-state elements to achieve an appropriate bandwidth of the laser pulse, in the wavelength domain, it is possible to control the properties of the laser pulse in the temporal domain i.e., the pulse duration. For instance, by selecting the solid-state elements to have a combined output bandwidth of, for instance, about 30 nm, it is possible to achieve a pulse duration corresponding to about 50 fs.

Incidentally, the bandwidth as used herewith refers to the Full width at Half Maximum, FWHM bandwidth, unless otherwise specified.

In none of the known configurations the solid-state elements have been selected in view of their relative emission properties and particularly in view of the relatively large shift of their respective fluorescence peak to generate sub-l00fs (e.g., 50fs) laser pulses. This, in combination with diode pumping and fluid cooling opens the way to efficiently generate high average power laser radiation with increased repetition rates in 1 to multi-100 kW ranges with large bandwidth and ultrashort laser pulses allowing to dramatically increase the peak power and therefore the achievable intensities in the foci of corresponding focusing optics.

In other words, the inventors have recognized the benefit of appropriately combining selected solid-state elements in view of the respective emission spectra, cooling and diode pumping to generate sub-l00fs, and preferably 50fs and less, enabling new applications with increased peak and average power as well as intensities.

The invention is defined by the attached set of claims. Further details of the disclosed devices, methods and systems are described below, which are helpful for understanding the claimed invention.

According to an embodiment of the present disclosure there is provided a laser amplifier as defined in claim 1, comprising:
a volume configured for receiving pump light from an array of laser diodes pump source,
a gain medium arranged within the volume and configured to amplify light in response to receiving the pump light,
the gain medium comprising a first solid-state element configured to emit a first laser radiation having a peak centred at a first peak fluorescence wavelength and a second solid-state element configured to emit a second laser radiation having a peak centred at a second peak fluorescence wavelength, each of the first and the second solid-state elements containing respective active laser ions,
wherein the difference between the first peak fluorescence wavelength and the second peak fluorescence wavelength is larger than or equal to 10 nm and smaller than or equal to 60 nm,
wherein the first solid-state element and the second solid-state element are cooled,
wherein the first peak fluorescence wavelength is larger than 1000
nm and smaller than 1060 nm, and
wherein the gain medium comprises a third cooled solid-state element containing active laser ions and configured to emit a third lager radiation having a peak centred at a third peak fluorescence wavelength, wherein the third peak fluorescence wavelength is comprised between the first peak fluorescence wavelength and the second peak fluorescence wavelength to obtain a broadband spectrum enabling generation of sub-100 fs pulses while at the same time preventing a deterioration of a desired gaussian-like shape of a spectrum of an emitted laser pulse.

According to another embodiment, the difference between the first peak fluorescence wavelength and the second peak fluorescence wavelength is larger than 20 nm and/or smaller than or equal to 30 nm. This ensures a sufficient overlap of the fluorescence spectra emitted by the first solid-state element and the second solid-state element. This in turn contributes to ensure a broad emitted output spectrum (i.e., output radiation) of the laser amplifier.

According to another embodiment, the first solid-state element and the second solid-state element are fluid-cooled.

Fluid cooling encompasses for instance cooling by means of a cooling liquid or cooling gas.

According to this embodiment, it is possible to improve the efficiency while reducing heat delivery to the active medium and achieving high average power. It thus becomes feasible to have high efficiency, high average power, high peak-power capabilities with ultrashort pulse capabilities allowing high repetition rate operation of the system.

According to some embodiments, the first solid-state element and the second solid-state element can be in the same cooling enclosure or can have separate cooling enclosures and cooling cycles. They can be pumped by the same diodes or can be pumped by separate diodes.

According to the claimed embodiment the first peak fluorescence wavelength is larger than 1000 nm and smaller than 1060 nm. Further preferably, the first peak fluorescence wavelength is centred around 1053 nm.

According to another embodiment of the present disclosure, there is provided a laser device according to claim 8, and a laser system according to claim 9.

According to another embodiment of the present disclosure, there is provided a method as defined in claim 10.

### BRIEF DESCRIPTION OF THE DRAWINGS

Embodiments of the present disclosure, which are presented for better understanding the present invention, but which are not to be seen as being limiting, are now described with reference to the figures in which:
FIG. 1 shows a laser amplifier according to the known art.
FIG. 2 shows a laser amplifier according to a first embodiment that is not part of the claimed invention.
FIG. 3 shows a laser amplifier according to a variation of the first embodiment.
FIG. 4A shows the fluorescence spectra of the solid-state elements according to an example of the first embodiment.
FIG. 4B shows simulated laser radiation and seed radiation according to a second embodiment that is not part of the claimed invention.
FIG. 5 shows a laser amplifier according to a third embodiment that is in accordance with the claimed invention.
FIG. 6 shows the fluorescence spectra of the solid-state elements according to a third embodiment.
FIG. 7 shows a block diagram of an implementation example of a laser according to an embodiment useful for understanding the claimed invention and including the laser amplifier.
FIG. 8 shows a block diagram relative to a method for lasing and amplifying according to a fourth embodiment that is useful for understanding the claimed invention.
FIG. 9 shows the spectral profile of additional solid-state elements which can be employed according to additional embodiments.

### DETAILED DESCRIPTION OF PREFERRED EMBODIMENTS

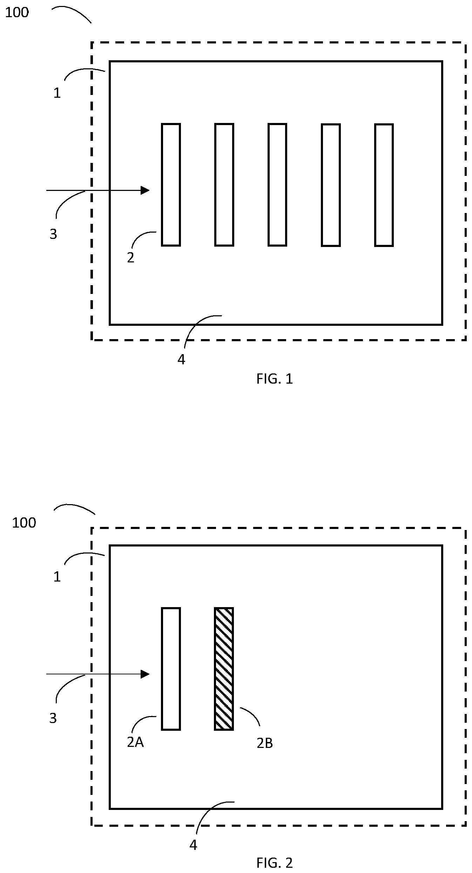

FIG. 1 shows a laser amplifier according to the known art. According to FIG. 1 there is provided a laser amplifier 100 comprising a volume 1 which includes a distributed gain medium. The volume 1 is part of a laser chamber. The gain medium comprises an input surface and an output surface which generally opposes the input surface.

The distributed gain medium also comprises a plurality of solid-state elements 2 (i.e., the gain material). The volume 1 is configured to include a cooling fluid 4, for instance a cooling liquid to mitigate the thermal stress.

The cooling fluid directly contacts the solid-state elements. For instance, the fluid flows about, or around, the solid-state elements so that the radiation generated by the solid-state elements directly crosses the cooling liquid.

The solid-state elements of the plurality of solid-state elements 2 are of a same type. For instance, all the solid-state elements 2 are rare-earth (e.g. neodymium) doped glass, or yttrium lithium fluoride (Nd:YLF).

The solid-state elements may be held in respective fixed position within the volume 1.

Pump light 3 produced by a light pump source (not shown in the figure) impinges on the gain material, that is, on the plurality of the solid-state elements 2. A diode laser pump is an example of a light pump source.

The gain material can be pumped by the light pump source to produce excited state ions. Amplified pulses can then be produced by directing a plurality of light pulses to be amplified (e.g., the seed laser), through the gain medium. The pulses to be amplified can pass more than one time through the medium and hence can be further amplified.

Fig. 2 shows a laser amplifier according to a first embodiment that is not part of the claimed invention. The first embodiment may comprise components or elements similar to, or corresponding to, those of the laser amplifier of the known art described above. For the sake of brevity, description of similar or corresponding components or elements is not repeated. It will however be readily understood by those skilled in the art that said components or elements may be employed also in connection with the first embodiment, except when indicated otherwise.

According to the first embodiment, the laser amplifier comprises a volume configured to receive pump light from an array of laser diodes pump source. It also comprises a gain medium arranged within the volume and configured to amplify light in response to receiving the pump light.

The gain medium comprises two different types of solid-state elements. That is, it comprises a first solid-state element and a second solid-state element.

According to a variation of the first embodiment, one or more of the solid-state elements may be a glass. However, the present disclosure is not limited thereto, and other types of solid-state elements may be employed. For instance, crystals and/or ceramics may be employed.

A solid state-element of a given type is characterized by the properties of the emitted fluorescence spectra, for example by the position of the peak (or maximum) of the fluorescence emission spectra. This peak may also be referred to as fluorescence maximum. The peak position may be expressed by the wavelength at which the peak is centred and may be referred to as peak fluorescence wavelength. The peak may be an absolute peak or a relative peak (i.e., a local maximum).

Therefore, solid-state elements of different types are characterized by different fluorescence emission spectra and for instance by different positions of the peak of the fluorescence emission spectra.

It will be understood that different type of solid-state elements, might be characterized by properties different than the position of the peak. For instance, they might be characterized by the respective full width half maximum, FWHM, so that even if two solid-state elements have the peak at a same spectral position (for instance at a same wavelength), they are of a different type if their FWHM is different.

The (fluorescence) emission spectrum is the radiation emitted by the solid-state element, for instance, in response to receiving pump light.

According to the first embodiment the gain medium comprises a first solid-state element 2A (i.e., a first type of solid-state element) and a second solid-state element 2B (i.e., a second type of solid-state element). The first solid-state element 2A is configured to emit a first laser radiation having a peak centred at a first peak fluorescence wavelength λ₁. The second solid-state element 2B is configured to emit a second laser radiation having a peak centred at a second peak fluorescence wavelength λ₂.

Each of the first and the second solid-state elements contain respective active laser ions.

The first solid-state element and the second solid-state element are selected so that the difference between the first peak fluorescence wavelength and the second peak fluorescence wavelength is larger than or equal to 10 nm and smaller than or equal to 60 nm. In particular, it has been determined that pair of solid-state materials bound by this spectral relationship are suited to produce the desired pulse duration. On the other side, materials lying outside this range result in less favourable pulse properties.

Moreover, the first solid-state element and the second solid-state element are cooled, for instance liquid cooled.

According to an embodiment, the first solid-state element may be a LG-770 glass and the second solid-state element may be a K-824 glass. This combination is particularly advantageous since in view of the larger than 10 nm shift in the respective emission peaks, it allows to achieve FWHM spectral output larger than 16 nm with a peak wavelength between 1050nm and 1070nm. Such a spectral content can produce a pulse with duration shorter than 100 fs.

The properties of these material are well-known in the field of endeavour of the present disclosure and are for instance described in the book "Nd-doped Laser Glass Spectroscopic and Physical Properties, Band 1 M-95, Rev. 2", Stanley Edward Stokowski, Lawrence Livermore National Laboratory, University of California, 1981.

However, the present disclosure is not limited thereto and according to another example, the first element may be a LG-770 glass and the second solid-state element may be a L-65. The L-65 is a glass which is also well-known in the field of endeavour of the present patent application and is also described in the above-referenced book.

It will however be understood that the present disclosure is not limited by the specific examples of solid-state materials given and other solid-state material can readily be employed as long as the respective peak fluorescence wavelengths satisfy the above spectral condition.

The solid-state elements may have the form of a disk or of a thin slab. The thickness of the solid-state elements can be chosen based on the desired cooling effect.

A laser including the laser amplifier of the first embodiment can reach energy larger than or equal to 100 J, a pulse duration equal to or smaller than l00fs and a pulse repetition frequency of 10Hz. The laser may also be scalable to higher average and peak power.

The diode pumping enables to improve efficiency and to reduce heat delivery to the active medium. The cooling provides together with diode pumping high average power capabilities.

The laser amplifier of the present disclosure, in view of the combination of mixed solid-state elements, diode pumping and cooling enables to obtain laser radiation having high efficiency, high average power, high peak power capabilities allowing high repetition rate operation of the system.

For instance, the laser amplifier of the present disclosure enables to obtain laser radiation having (i) energy after compression equal to or larger than 50 J and scalable up to or larger than 100 J, (ii) peak power of about 1 PW, (iii) average power of 500 W or higher.

According to a variation of the first embodiment, the laser radiation can be stretched out temporally and spectrally, afterwards the pulse may be amplified and then compressed according to the chirped pulse amplification, CPA, technique. However, the present disclosure is not limited thereto and other techniques, different from the CPA, may also be applied. For instance, also the Optical Parametric Chirped Pulse Amplification (OPCPA) technique may be applied.

Accordingly, the laser parameters can be stretched to energy larger or equal to 200 J, pulse duration equal to or smaller than 50fs and a pulse repetition frequency substantially larger than or equal to 10Hz.

While the figures show pump light crossing the solid-state elements perpendicularly, it will be apparent that the present disclosure is not limited thereto and configuration wherein the pump light does not impinge perpendicularly on the solid-state elements are also possible and within the scope of the present disclosure.

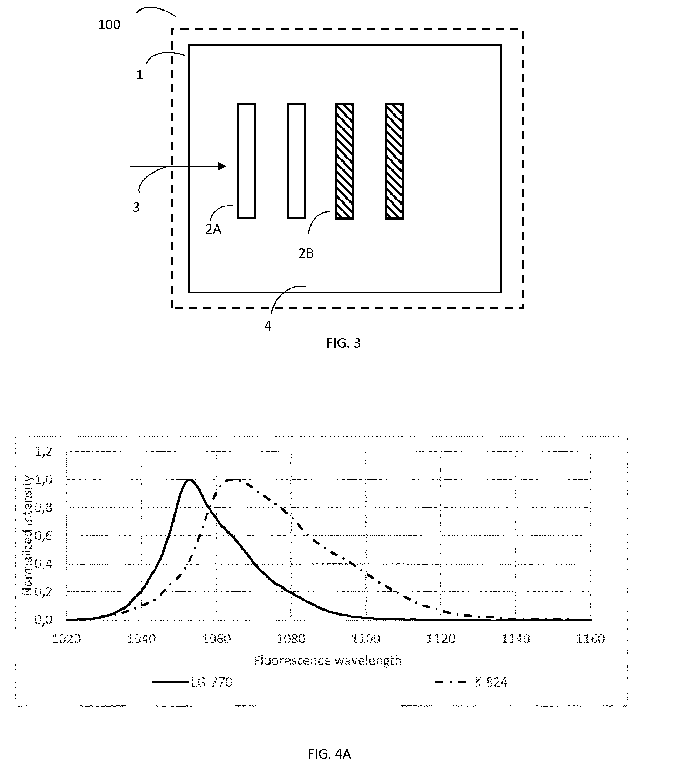

FIG. 3 shows a laser amplifier according to a variation of the first embodiment of the present disclosure.

In particular, according to FIG. 3 the first solid-state element 2A and the second solid-state element 2B comprises each two solid-state elements.

More generally, according to the present disclosure the first type of solid-state element may comprise a first plurality M of solid-state elements and the second-solid state element may comprise a second plurality N of solid-state elements. M may be equal to N. Alternatively M and N may be different. M and N are both integer number equal to, or larger than, 2.

Moreover, FIG. 3 shows a case wherein the first type of solid-state element 2A and the second type of solid-state element 2B are placed on different sides of the volume 1. However, the present disclosure is not limited thereto, and according to a further variation of the embodiment, the first solid-state element 2A and the second solid-state element 2B may be interlaced. That is for example, a given second solid-state element 2B may be placed between two first type of solid-state element 2A or vice versa.

FIG. 4A shows the spectra of the solid-state elements according to an implementation of the first embodiment.

The x-axis shows the wavelength of the emission spectra and the y-axis the normalised intensity of the spectra.

In particular, it shows laser radiation emitted by a laser comprising a laser amplifier employing LG-770 glass (an example of the first solid state element) and K-824 glass (an example of the second solid-state element). As it can be seen, in the example provided, the emission peak (or peak fluorescence wavelength) of the first solid-state element is located at approximately 1053 nm. Further, in the example provided, the emission peak (peak fluorescence wavelength of the second solid-state element is located at approximately 1065 nm.

As it will be apparent to those skilled in the art the emission peaks can be measured for instance via a spectrometer which may have an error margin of approximately 1 nm.

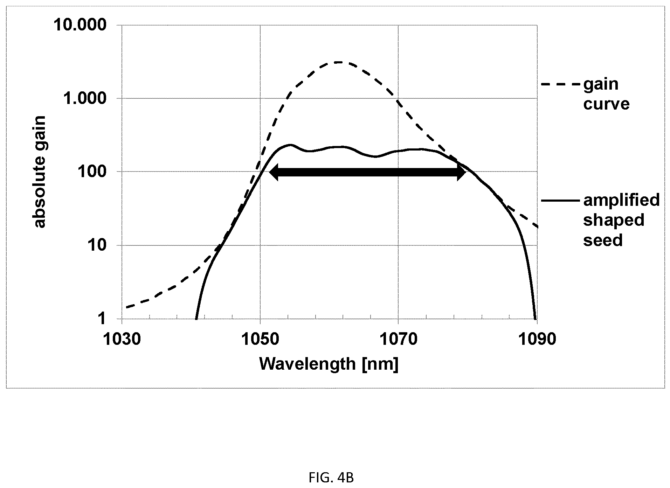

FIG. 4B shows simulated laser radiation and simulated seed radiation according to a second embodiment that is not part of the claimed invention. This embodiment is described also with reference to the first embodiment and by placing special emphasis on the differences.

The solid line in FIG. 4B shows the amplified shaped seed which is feed to the laser amplifier. The seed is produced by a seed radiation source. It will be understood that the seed radiation depicted has been amplified for illustration purposes and is hence not in scale with the actual seed inputted in the laser amplifier.

The dashed line shows instead the laser radiation emitted by a laser comprising the laser amplifier according to the first embodiment of the present disclosure wherein LG-770 is used as the first solid-state element and K-824 is used as the second solid-state element.

In the figure, the wavelength, expressed in nm, is reported along the x-axis, whereas the normalized fluorescence spectrum with respect to peak fluorescence is reported in the y-axis. As indicated by the double arrow, the laser emission spectrum has a broad band of about 30 nm (FWHM).

According to the second embodiment the laser amplifier may be configured to receive as input shaped seed radiation by a seed radiation source. The seed radiation may have a predetermined spectral shape comprising peaks in correspondence of each one of the peak fluorescence wavelength of the solid-state elements and also preferably have an additional peak comprised therebetween. The seed shape is such that the output radiation of the laser is optimized.

As used herein "in correspondence of the peak fluorescence wavelength" may for instance mean that the seed peak and the corresponding fluorescence peak overlaps within the error margins. Alternatively, it may mean that the seed peak and the fluorescence peak are within a given predetermined range in the wavelength domain. For instance, the predetermined range may be within 5 % of the peak fluorescence wavelength.

In other words, the pre-shaped seed radiation may have a predetermined spectral shape comprising three peaks of which, the first peak being in correspondence of the first peak fluorescence wavelength of the first solid-state elements and the second peak being in correspondence of the second peak fluorescence wavelength of the second solid-state elements. The third peak is preferable.

Pre-shaped means that the shape, or form of the seed radiation has been determined prior to its employment with (i.e., prior to the seed to) the laser amplifier. In particular, the shape has been determined a priori on the basis of the gain medium.

In view of the shaped seed, it is possible to enhance the overall output spectrum of the laser amplifier according to the first embodiment in order to achieve even shorter pulses. According to a specific, non-limiting example, the shaped seed can be generated with the method of Optical Parametric Chirped Pulse Amplification, OPCPA balance where the seed pulse is chirped in frequency and the spectral content is shaped by the intensity of the overlapping pump in the parametric amplification process. In this connection, reference can also be made to "Spectral pulse shaping of a 5 Hz, multi-joule, broadband optical parametric chirped pulse amplification frontend for a 10 PW laser system", BATYSTA et Al., Vol. 43, No. 16 / 15 August 2018 / Optics Letters.

The pump pulse is in turn shaped electronically.

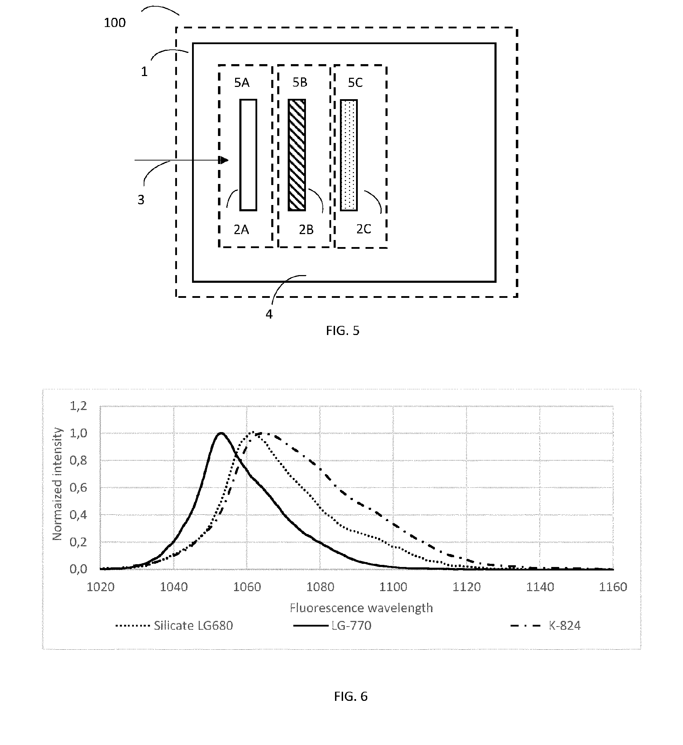

Fig. 5 shows a laser amplifier according to a third embodiment that is in accordance with the claimed invention.

This embodiment is described also with reference to the first and/or second embodiment and by placing special emphasis on the differences. For the sake of brevity, the description of the corresponding components is not repeated, but is applicable to the claimed embodiment.

According to the third embodiment, there are provided three different types of solid-state elements.

An example of the third solid-state element may be the silicate LG-680 produced by the company Schott (registered trademark). As also depicted in FIG. 6 the silicate LG-680 has an emission peak of about 1062 nm. That is, the emission peak of the third solid-state material is comprised between the emission peak of the first solid-state material and the second solid-state material.

Incidentally, and as schematically shown in FIG. 5 by the dashed lines, the first solid-state element, the second solid-state element and the third solid-state element may be included in separate cooling enclosure, 5A, 5B and 5C. In this case, the solid state-elements may have separate, i.e., independent, cooling cycles. This may be advantageous since it may allow to design the cooling so as to take into account the different properties of the different solid-state materials.

However, the present disclosure is not limited thereto, and the solid-state elements may also be in a same cooling enclosure.

Moreover, the solid-state materials can be pumped by the same diodes array or can be pumped by separate diode array.

FIG. 6 correspond to FIG. 4A wherein additionally the fluorescence emission spectrum of the silicate LG-680 is represented.

According to the third embodiment it is possible to improve the shape of the spectral profile of the radiation emitted by the laser amplifier. In particular, also depending on the specific spectral properties of the selected first solid-state element and second solid-state element, the third solid state element might prevent the formation of two humps (or local peaks) in the spectral profile of the emitted radiation.

The two humps might occur for instance if the emission peak of the first and second solid state material are too far apart in the wavelength space. In other words, the third solid state element may improve the spectral characteristics, by spectrally filling the gaps between the emission spectrum of the first solid-state element and the second solid-state element.

Hence, in accordance with the claimed invention, it becomes possible to obtain a broadband spectrum (and hence short laser pulses) while at the same time preventing deterioration of the desired gaussian-like shape of spectrum of the emitted laser pulse.

While according to the third embodiment, only three different types of solid-states elements have been discussed, the present disclosure is not limited to this. In particular, configurations wherein the gain medium comprises, four, five or more solid-state elements is also possible.

In case, the gain medium comprises a third solid-state element, the seed shape may also comprise an additional fourth peak in correspondence of the third peak fluorescence wavelength of the third solid-state elements.

More generally, the seed shape may comprise a number of peaks equal to or larger than the number of solid-state elements.

A given solid-state element may have more than a single peak fluorescence wavelength (for instance an absolute peak and a relative peak). Therefore, and even more generally, the shaped seed may comprise a number of peaks larger than the total count of peak fluorescence wavelengths of the solid-state elements of the laser amplifier.

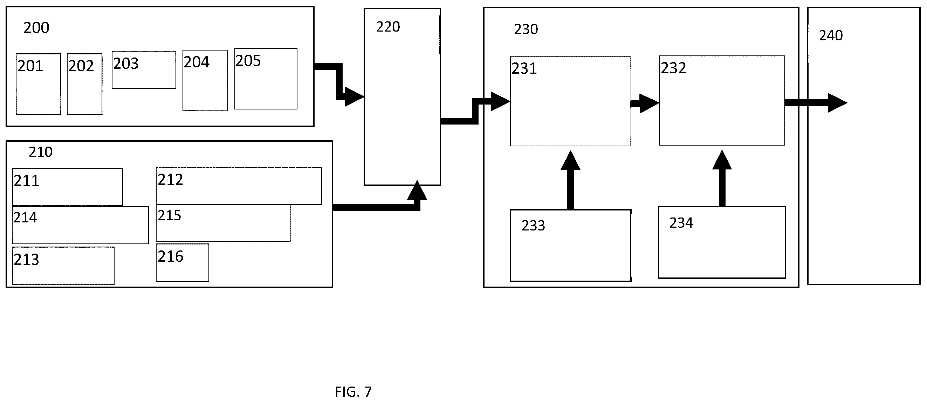

FIG. 7 shows a block diagram of an implementation example of a laser according to an embodiment useful for understanding the present invention.

The laser comprises a CPA stage 1 denoted by reference 200, a OPCPA stage pump laser, denoted by reference 210 an OPCPA stage denoted by reference 220 a glass amplifier stage denoted by reference 230 and a compressor 240.

The CPA stage 1 may include a plurality of units and in particular a fs source 201, a pulse stretcher 202, an amplifier 203, a compressor 204 and a contrast filter 205. At the end of the CPA stage 1, and according to a specific, non-limiting example, the radiation may have the following properties: Pulse duration 30 fs, central wavelength 1060nm, BW >50 nm, Energy ~10 mJ and being characterized by a high contrast.

The OPCPA stage pump laser may include a plurality of units and in particular, a cw fiber source 211, a temporal pulse shaper 212, a DPSSL Power Amplifier Nd:YAG 213, DP Regen amplifier 214 a spatial shaping unit 215 and a SHG unit. At the end of the OPCPA stage pump laser, according to a specific, non-limiting example, the pulse may have the following properties: energy ~3J, central wavelength 532nm, pulse duration ~5ns and it may be spatially and temporally shaped.

At the OPCPA stage the pulse is characterized by Stretcher, ~5ns chirped, ~0.5 J, 50 nm, spectrally pre-shaped.

The glass amplifier stage may include a silicate glass cooled disk amplifier 231 and characterized by the following properties, x20 ~(25mm)², 10 J, a phosphate glass cooled disk amplifier 232 and characterized by the following properties, xl2, ~(50mm)², 120 J, diode pump 233 having 880nm and ~0.6 MW, and diode pump 234 having, 880nm, ~2xl.2 MW.

That is, at the glass amplifier stage the glasses are cooled by means of a cooling liquid.

At the compressor 240, and according to a specific, non-limiting example the pulse may have the following characteristics: sample of: 100 J, <100fs, 10Hz.

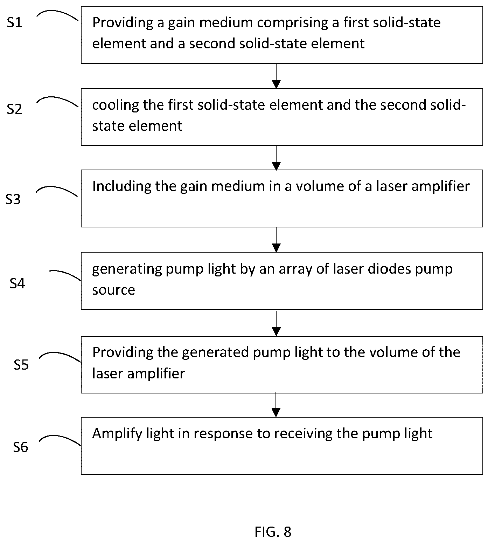

FIG. 8 shows a block diagram relative to a method for lasing and amplifying according to a fourth embodiment useful for understanding the present invention.

The method of lasing and amplifying comprises the following steps.

A first step (S1) of providing a gain medium comprising a first solid-state element configured to emit a first laser radiation having a peak centred at a first peak fluorescence wavelength and a second solid-state element configured to emit a second laser radiation having a peak centred at a second peak fluorescence wavelength, each of the first and the second solid-state elements containing respective active laser ions, wherein, the difference between the first peak fluorescence wavelength and the second peak fluorescence wavelength is larger than or equal to 10 nm and smaller than or equal to 60 nm.

A second step (S2) of cooling the first solid-state element and the second solid-state element.

A third step (S3) of including the gain medium in a volume of the laser amplifier.

A fourth step (S4) generating pump light by an array of laser diodes pump source.

A fifth step (S5) providing the generated pump light to the volume of the laser amplifier.

A sixth step (S6) amplify, by the gain medium, light in response to receiving the pump light.

It will be understood that the steps of the method need not to be necessarily performed in the order described and certain steps may be performed before others. For instance, the second step of cooling may be performed after the third step of including the gain medium in the volume.

### OTHER EMBODIMENTS

According to a variation of the embodiments described above, the laser system my further comprise a self-phase modulation unit configured to perform self-phase modulation, SPM, of the laser radiation emitted by the laser amplifier. Performing SPM enables achieving subsequent additional pulse compression in an additional compression unit.

In view of the additional SPM, the light emitted by the laser amplifier can be compressed to even shorter pulses.

The laser radiation comprises, or consist of, a respective wavelength or a respective range of wavelengths. Similarly, the first, second and third laser radiation each comprise or consist of a respective first, second and third wavelength or a respective first, second or third range of wavelengths.

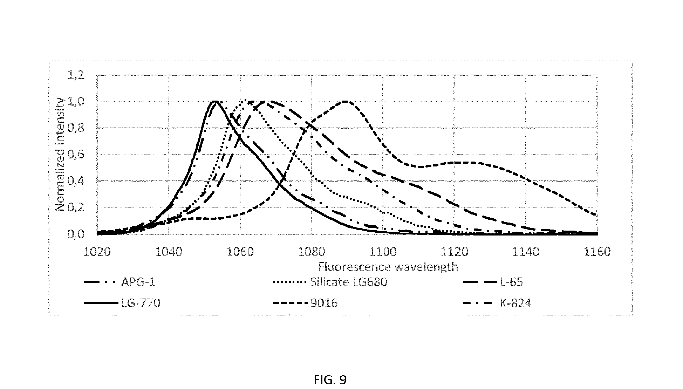

FIG. 9 shows the spectral profile of solid-state elements which can be employed according to embodiments of the present disclosure. While in the above description reference has been made to LG-770, K-824 and silicate LG-680, the present disclosure is not limited thereto an additional solid-state material may be used, as for instance the glass 9016, L-65 and APG-1. The first glass is described by "Nd-doped Laser Glass Spectroscopic and Physical Properties, Volume 1 M-95, Rev. 2". The second glass is described by "Nd-doped Laser Glass Spectroscopic and Physical Properties, Volume 2 M-95, Rev. 2. The third glass is commercialized by the company Schott (registered trademark).

Any pair of these material can be selected as long as the difference between the first peak fluorescence wavelength and the second peak fluorescence wavelength is larger than or equal to 10 nm and smaller than or equal to 60 nm.

FIG. 9 corresponds to FIG. 6 (and hence to FIG. 4A) wherein additional fluorescence emission spectra, corresponding to additional solid-state elements, are shown.

In view of the large shift, an advantageous combination of solid-state materials may be LG-770 and 9016.

Moreover, any of the material shown in the figure can be used as the third (or the fourth) solid-state material as long as the respective fluorescence peak is comprised between the first fluorescence peak and the second fluorescence peak.

Incidentally, as it can be seen from the figure, the peak fluorescence wavelength of LG-770 is at around 1053 nm, the peak fluorescence wavelength of APG-1 is at around 1056 nm, the peak fluorescence wavelength of silicate LG-680 is at around 1062 nm, the peak fluorescence wavelength of K-824 is at around than 1065 nm, the peak fluorescence wavelength of L-65 is at around 1070 nm and the peak fluorescence wavelength of 9016 is at around 1090 nm.

These materials are well-known and described in the literature or commercially available (e.g. Schott, registered trademark) .

According to an embodiment the emission spectrum of the laser amplifier extends beyond the range comprised between the lowest peak fluorescence wavelength (e.g., the first peak fluorescence wavelength) and highest peak fluorescence wavelength (e.g., the second peak fluorescence wavelength) of the selected solid-state materials. A suitable range is the peak-to-peak range extended, on the right of the highest peak side, of the range where the fluorescence of the second solid-state material drops to 80% of its maximum and extended, on the left of the lowest peak side, of the range where the fluorescence of the first solid-state material drops to 80% of its maximum.

If the intensity of the fluorescence spectrum at a given wavelength is 80% of the intensity at the peak fluorescence wavelength the corresponding gain is lower than that corresponding to the peak fluorescence wavelength. Such lower gain can be compensated by appropriately seeding the gain medium. In particular, the seed radiation may be spectrally shaped to provide more energy at the wavelengths comprised between (less than) 100% of the peak maximum and 80% of the peak maximum.

Appropriately selecting the spectral shape of the seed radiation allows hence to achieve a broad and flat output spectrum within the range.

In other words, the optimum seed shape is a function of the fluorescence spectrum of the solid-state materials.

Although detailed embodiments have been described, these only serve to provide a better understanding of the disclosure defined by the independent claims and are not to be seen as limiting.

## Claims

1. A laser amplifier (100) comprising:
a volume (1) configured for receiving pump light (3) from an array of laser diodes pump source,
a gain medium arranged within the volume (1) and configured to amplify light in response to receiving the pump light (3),
the gain medium comprising a first solid-state element (2A) configured to emit a first laser radiation having a peak centred at a first peak fluorescence wavelength and a second solid-state element (2B) configured to emit a second laser radiation having a peak centred at a second peak fluorescence wavelength, each of the first and the second solid-state elements (2B) containing respective active laser ions,
wherein the difference between the first peak fluorescence wavelength and the second peak fluorescence wavelength is larger than or equal to 10 nm and smaller than or equal to 60 nm, and
wherein the first solid-state element (2A) and the second solid-state element (2B) are cooled,
**characterized in that**
the first peak fluorescence wavelength is larger than 1000 nm and smaller than 1060 nm,
and **in that** the gain medium comprises a third cooled solid-state element containing active laser ions and configured to emit a third laser radiation having a peak centred at a third peak fluorescence wavelength, wherein the third peak fluorescence wavelength is comprised between the first peak fluorescence wavelength and the second peak fluorescence wavelength to obtain a broadband spectrum enabling generation of sub-100 fs pulses while at the same time preventing a deterioration of a desired gaussian-like shape of a spectrum of an emitted laser pulse.

2. The laser amplifier (100) of claim 1, further comprising a cooling fluid (4) directly contacting the solid-state elements.

3. The laser amplifier (100) of any one the previous claims, wherein at least one of the solid-state elements comprises a plurality of solid-state elements.

4. The laser amplifier (100) of claim 3 wherein each one of the first solid-state element (2A) and the second solid-state element (2B) comprises a respective plurality of solid-state elements.

5. The laser amplifier (100) of any one of the previous claims, wherein, the first peak fluorescence wavelength is centred around 1053 nm.

6. The laser amplifier (100) of any one of the previous claims,
wherein the difference between the first peak fluorescence wavelength and the second peak fluorescence wavelength is larger than or equal to 20 nm and smaller than or equal to 30 nm.

7. The laser amplifier (100) of any one of the previous claims, wherein the first solid-state element (2A) and the second solid-state element (2B) are arranged in different cooling enclosures and cooling cycles.

8. A laser device comprising:
- the laser amplifier (100) of any one of the previous claims;
- a light pump source configured to generate pump light (3); and
- a seed radiation source configured to input seed radiation to the laser amplifier (100).

9. A laser system, comprising the laser device of claim 8, further comprising a self-phase modulation unit configured to perform self-phase modulation of chirped pulse amplification, CPA, compressed short pulse laser radiation emitted by the laser amplifier (100) and a subsequent compression unit.

10. A method of amplifying comprising the steps of:
- providing a gain medium comprising a first solid-state element (2A) configured to emit a first laser radiation having a peak centred at a first peak fluorescence wavelength and a second solid-state element (2B) configured to emit a second laser radiation having a peak centred at a second peak fluorescence wavelength, each of the first (2A) and the second solid-state elements (2B) containing respective active laser ions, wherein, the difference between the first peak fluorescence wavelength and the second peak fluorescence wavelength is larger than or equal to 10 nm and smaller than or equal to 60 nm and the first solid-state element (2A) and the second solid-state element (2B) are cooled, wherein the first peak fluorescence wavelength is larger than 1000 nm and smaller than 1060 nm and a third cooled solid-state element containing active laser ions and configured to emit a third laser radiation having a peak centred at a third peak fluorescence wavelength, wherein the third peak fluorescence wavelength is comprised between the first peak fluorescence wavelength and the second peak fluorescence wavelength to obtain a broadband spectrum enabling generation of sub-100 fs pulses while at the same time preventing a deterioration of a desired gaussian-like shape of a spectrum of an emitted laser pulse,
- including the gain medium in a volume (1) of a laser amplifier (100),
- generating pump light (3) by an array of laser diodes pump source,
- providing the generated pump light (3) to the volume (1) of the laser amplifier (100),
- amplify, by a gain medium arranged within the volume (1), light in response to receiving the pump light (3).

## Patentansprüche

1. Laserverstärker (100), aufweisend:
ein Volumen (1), das zum Empfangen von Pumplicht (3) von einer Pumpquelle aus einem Array aus Laserdioden eingerichtet ist,
ein Verstärkungsmedium, das innerhalb des Volumens (1) angeordnet und eingerichtet ist, Licht in Reaktion auf das Empfangen des Pumplichts (3) zu verstärken,
wobei das Verstärkungsmedium ein erstes Festkörperelement (2A), das eingerichtet ist, eine erste Laserstrahlung mit einem bei einer ersten Peak-Fluoreszenzwellenlänge zentrierten Peak zu emittieren, und ein zweites Festkörperelement (2B), das eingerichtet ist, eine zweite Laserstrahlung mit einem bei einer zweiten Peak-Fluoreszenzwellenlänge zentrierten Peak zu emittieren, aufweist, wobei das erste und das zweite Festkörperelement (2B) jeweils aktive Laserionen enthalten,
wobei die Differenz zwischen der ersten Peak-Fluoreszenzwellenlänge und der zweiten Peak-Fluoreszenzwellenlänge mindestens 10 nm und höchstens 60 nm beträgt, und
wobei das erste Festkörperelement (2A) und das zweite Festkörperelement (2B) gekühlt werden,
**dadurch gekennzeichnet, dass**
die erste Peak-Fluoreszenzwellenlänge größer als 1000 nm und kleiner als 1060 nm ist,
und dass das Verstärkungsmedium ein drittes gekühltes Festkörperelement aufweist, das aktive Laserionen enthält und eingerichtet ist, eine dritte Laserstrahlung mit einem bei einer dritten Peak-Fluoreszenzwellenlänge zentrierten Peak zu emittieren, wobei die dritte Peak-Fluoreszenzwellenlänge zwischen der ersten Peak-Fluoreszenzwellenlänge und der zweiten Peak-Fluoreszenzwellenlänge liegt, um ein Breitbandspektrum zu erhalten, das die Erzeugung von Sub-100 fs-Impulsen ermöglicht, während gleichzeitig eine Verschlechterung einer gewünschten gaußförmigen Form eines Spektrums eines emittierten Laserimpulses verhindert wird.

2. Laserverstärker (100) nach Anspruch 1, ferner aufweisend ein Kühlfluid (4), das in direktem Kontakt mit den Festkörperelementen ist.

3. Laserverstärker (100) nach einem der vorhergehenden Ansprüche, wobei mindestens eines der Festkörperelemente mehrere Festkörperelemente aufweist.

4. Laserverstärker (100) nach Anspruch 3, wobei das erste Festkörperelement (2A) und das zweite Festkörperelement (2B) jeweils mehrere Festkörperelemente aufweisen.

5. Laserverstärker (100) nach einem der vorhergehenden Ansprüche, wobei die erste Peak-Fluoreszenzwellenlänge um 1053 nm zentriert ist.

6. Laserverstärker (100) nach einem der vorhergehenden Ansprüche,
wobei die Differenz zwischen der ersten Peak-Fluoreszenzwellenlänge und der zweiten Peak-Fluoreszenzwellenlänge mindestens 20 nm und höchstens 30 nm beträgt.

7. Laserverstärker (100) nach einem der vorhergehenden Ansprüche, wobei das erste Festkörperelement (2A) und das zweite Festkörperelement (2B) in unterschiedlichen Kühlgehäusen und Kühlzyklen angeordnet sind.

8. Laservorrichtung, aufweisend:
- den Laserverstärker (100) nach einem der vorhergehenden Ansprüche;
- eine Lichtpumpquelle, die zum Erzeugen von Pumplicht (3) eingerichtet ist; und
- eine Seedstrahlungsquelle, die zum Eingeben von Seedstrahlung in den Laserverstärker (100) eingerichtet ist.

9. Lasersystem, aufweisend die Laservorrichtung nach Anspruch 8, ferner aufweisend eine Selbstphasenmodulationseinheit, die eingerichtet ist zum Durchführen einer Selbstphasenmodulation von gechirpter Pulsverstärkung, CPA, komprimierter Kurzpulslaserstrahlung, die von dem Laserverstärker (100) emittiert wird, sowei eine nachfolgende Kompressionseinheit.

10. Verstärkungsverfahren, aufweisend die folgenden Schritte:
- Bereitstellen eines Verstärkungsmediums mit einem ersten Festkörperelement (2A), das eingerichtet ist, eine erste Laserstrahlung mit einem bei einer ersten Peak-Fluoreszenzwellenlänge zentrierten Peak zu emittieren, und mit einem zweiten Festkörperelement (2B), das eingerichtet ist, eine zweite Laserstrahlung mit einem bei einer zweiten Peak-Fluoreszenzwellenlänge zentrierten Peak zu emittieren, wobei das erste (2A) und das zweite Festkörperelement (2B) jeweils aktive Laserionen enthalten, wobei die Differenz zwischen der ersten Peak-Fluoreszenzwellenlänge und der zweiten Peak-Fluoreszenzwellenlänge mindestens 10 nm und höchstens 60 nm beträgt und das erste Festkörperelement (2A) und das zweite Festkörperelement (2B) gekühlt werden, wobei die erste Peak-Fluoreszenzwellenlänge größer als 1000 nm und kleiner als 1060 nm ist, und ein drittes gekühltes Festkörperelement, das aktive Laserionen enthält und eingerichtet ist, eine dritte Laserstrahlung mit einem bei einer dritten Peak-Fluoreszenzwellenlänge zentrierten Peak zu emittieren, wobei die dritte Peak-Fluoreszenzwellenlänge zwischen der ersten Peak-Fluoreszenzwellenlänge und der zweiten Peak-Fluoreszenzwellenlänge liegt, um ein Breitbandspektrum zu erhalten, das die Erzeugung von Sub-100 fs-Impulsen ermöglicht, während gleichzeitig eine Verschlechterung einer gewünschten gaußförmigen Form eines Spektrums eines emittierten Laserimpulses verhindert wird,
- Aufnehmen des Verstärkungsmediums in ein Volumen (1) eines Laserverstärkers (100),
- Erzeugen von Pumplicht (3) durch eine Pumpquelle aus einem Array aus Laserdioden,
- Bereitstellen des erzeugten Pumplichts (3) an das Volumen (1) des Laserverstärkers (100),
- Verstärken von Licht durch ein Verstärkungsmedium, das innerhalb des Volumens (1) angeordnet ist, in Reaktion auf das Empfangen des Pumplichts (3).

## Revendications

1. Amplificateur laser (100) comprenant :
un volume (1) configuré pour recevoir une lumière de pompage (3) provenant d'une source de pompage de réseau de diodes laser,
un milieu de gain agencé à l'intérieur du volume (1) et configuré pour amplifier la lumière en réponse à la réception de la lumière de pompage (3),
le milieu de gain comprenant un premier élément à l'état solide (2A) configuré pour émettre un premier rayonnement laser ayant un pic centré sur une première longueur d'onde de fluorescence de pic et un second élément à l'état solide (2B) configuré pour émettre un second rayonnement laser ayant un pic centré sur une seconde longueur d'onde de fluorescence de pic, chacun des premier et second éléments à l'état solide (2B) contenant des ions laser actifs respectifs,
dans lequel la différence entre la première longueur d'onde de fluorescence de pic et la seconde longueur d'onde de fluorescence de pic est supérieure ou égale à 10 nm et inférieure ou égale à 60 nm, et
dans lequel le premier élément à l'état solide (2A) et le second élément à l'état solide (2B) sont refroidis,
**caractérisé en ce que**
la première longueur d'onde de fluorescence de pic est supérieure à 1000 nm et inférieure à 1060 nm,
et **en ce que** le milieu de gain comprend un troisième élément à l'état solide refroidi contenant des ions laser actifs et configuré pour émettre un troisième rayonnement laser ayant un pic centré sur une troisième longueur d'onde de fluorescence de pic, dans lequel la troisième longueur d'onde de fluorescence de pic est comprise entre la première longueur d'onde de fluorescence de pic et la seconde longueur d'onde de fluorescence de pic pour obtenir un spectre à large bande permettant la génération d'impulsions inférieures à 100 fs tout en empêchant en même temps une détérioration d'une forme gaussienne souhaitée d'un spectre d'une impulsion laser émise.

2. Amplificateur laser (100) selon la revendication 1, comprenant en outre un fluide de refroidissement (4) en contact direct avec les éléments à l'état solide.

3. Amplificateur laser (100) selon l'une quelconque des revendications précédentes, dans lequel au moins l'un des éléments à l'état solide comprend une pluralité d'éléments à l'état solide.

4. Amplificateur laser (100) selon la revendication 3, dans lequel chacun du premier élément à l'état solide (2A) et du second élément à l'état solide (2B) comprend une pluralité respective d'éléments à l'état solide.

5. Amplificateur laser (100) selon l'une quelconque des revendications précédentes, dans lequel la première longueur d'onde de fluorescence de pic est centrée autour de 1053 nm.

6. Amplificateur laser (100) selon l'une quelconque des revendications précédentes,
dans lequel la différence entre la première longueur d'onde de fluorescence de pic et la seconde longueur d'onde de fluorescence de pic est supérieure ou égale à 20 nm et inférieure ou égale à 30 nm.

7. Amplificateur laser (100) selon l'une quelconque des revendications précédentes, dans lequel le premier élément à l'état solide (2A) et le second élément à l'état solide (2B) sont agencés dans différentes enceintes de refroidissement et différents cycles de refroidissement.

8. Dispositif laser comprenant :
- l'amplificateur laser (100) selon l'une quelconque des revendications précédentes ;
- une source de pompage de lumière configurée pour générer une lumière de pompage (3) ; et
- une source de rayonnement de départ configurée pour entrer un rayonnement de départ dans l'amplificateur laser (100).

9. Système laser, comprenant le dispositif laser selon la revendication 8, comprenant en outre une unité de modulation d'autophase configurée pour effectuer une modulation d'autophase d'une amplification d'impulsions comprimées, CPA, d'un rayonnement laser à impulsions courtes comprimé émis par l'amplificateur laser (100) et d'une unité de compression subséquente.

10. Procédé d'amplification comprenant les étapes consistant à :
- fournir un milieu de gain comprenant un premier élément à l'état solide (2A) configuré pour émettre un premier rayonnement laser ayant un pic centré sur une première longueur d'onde de fluorescence de pic et un second élément à l'état solide (2B) configuré pour émettre un second rayonnement laser ayant un pic centré sur une seconde longueur d'onde de fluorescence de pic, chacun des premier (2A) et second éléments à l'état solide (2B) contenant des ions laser actifs respectifs, dans lequel la différence entre la première longueur d'onde de fluorescence de pic et la seconde longueur d'onde de fluorescence de pic est supérieure ou égale à 10 nm et inférieure ou égale à 60 nm et le premier élément à l'état solide (2A) et le second élément à l'état solide (2B) sont refroidis, dans lequel la première longueur d'onde de fluorescence de pic est supérieure à 1000 nm et inférieure à 1060 nm et un troisième élément à l'état solide refroidi contenant des ions laser actifs et configuré pour émettre un troisième rayonnement laser ayant un pic centré sur une troisième longueur d'onde de fluorescence de pic, dans lequel la troisième longueur d'onde de fluorescence de pic est comprise entre la première longueur d'onde de fluorescence de pic et la seconde longueur d'onde de fluorescence de pic pour obtenir un spectre à large bande permettant la génération d'impulsions inférieures à 100 fs tout en empêchant en même temps une détérioration d'une forme gaussienne souhaitée d'un spectre d'une impulsion laser émise,
- inclure le milieu de gain dans un volume (1) d'un amplificateur laser (100),
- générer une lumière de pompage (3) par une source de pompage de réseau de diodes laser,
- fournir la lumière de pompage générée (3) au volume (1) de l'amplificateur laser (100),
- amplifier, par un milieu de gain agencé à l'intérieur du volume (1), la lumière en réponse à la réception de la lumière de pompage (3).
